# EUROPEAN PATENT SPECIFICATION

(11) **EP 1 671 465 B1**
(45) Date of publication and mention of the grant of the patent: **02.07.2008**
(21) Application number: 04816829.8
(22) Date of filing: 25.08.2004
(51) Int. Cl.: H04L 29/06

(54) **A SYSTEM AND ASSOCIATED METHOD TO DETERMINE AUTHENTICATION PRIORITY BETWEEN DEVICES**
SYSTEM UND ASSOZIIERTES VERFAHREN ZUR BESTIMMUNG DER AUTHENTIFIKATIONSPRIORITÄT ZWISCHEN EINRICHTUNGEN
SYSTEME ET PROCEDES ASSOCIES DESTINES A DETERMINER LA PRIORITE D'AUTHENTIFICATION ENTRE DES DISPOSITIFS

(30) Priority: 04.09.2003 US 656077
(43) Date of publication of application: 21.06.2006
(73) Proprietor: Intel Corporation, Santa Clara, CA 95052 (US)
(72) Inventor: JOHNSTON, David, Beaverton, OR 97006 (US)
(74) Representative: Dunlop, Hugh Christopher
(86) International application number: PCT/US2004/027716
(87) International publication number: WO 2005/041518

(56) References cited:
- US-A1- 2002 016 777

## Description

### TECHNICAL FIELD

Embodiments of the present invention are generally directed to communication system security and, more particularly to a system and associated methods to determine authentication priority between devices.

### BACKGROUND

In communication systems, there is often a need or at least a desire to confirm the identity of a remote device with which you are in communication. In fact, many communication system standards will require both parties in communication to authenticate the identity of the other. This level of authentication is typically referred to as two-way, mutual, or bi-directional authentication.

The conventional approach to performing such mutual authentication requires the use of at least two sequences of messages, the first enabling party A to authenticate party B, and the second enabling party B to authenticate party A. There may be scenarios, however, where one or more of the parties is unwilling to reveal its identity to the other until the other party has first revealed its identity. In such a situation, authentication may never occur and the opportunity for communication lost.
US 2002/0016777 A1 describes an automated trust negotiation system pertaining to the features of the preamble of the independent claims.

### BRIEF DESCRIPTION OF THE DRAWINGS

Embodiments of the present invention are illustrated by way of example, and not by way of limitation, in the figures of the accompanying drawings in which like reference numerals refer to similar elements and in which:
**Fig.1** is a block diagram of an example communication environment within which the teachings of the present invention may be practiced;
**Fig. 2** is a block diagram of an example security agent through which authentication priority may be established, according to but one example embodiment of the invention;
**Fig. 3** is a flow chart of an example method for to determine authentication priority, according to but one example embodiment of the present invention;
**Fig. 4** is a communication flow diagram exhibiting a method for determining authentication priority according to one example embodiment;
**Fig. 5** is a communication flow diagram exhibiting a method for determining authentication priority according to one example embodiment;
**Fig. 6** is a communication flow diagram exhibiting a method for determining authentication priority according to one example embodiment; and
**Fig. 7** is a block diagram of an example article of manufacture including content which, when accessed by a device, causes the device to implement one or more aspects of one or more embodiment(s) of the invention.

### DETAILED DESCRIPTION

Embodiments of a system and associated methods for determining authentication priority between devices are generally introduced herein. In this regard, according to but one example embodiment of the teachings of the present invention, a security agent is introduced to selectively exchange at least a subset of an authentication policy as a precursor to authentication. The security agent compares at least the received subset of the authentication policy of the remote device with at least a subset of a local authentication policy to determine a relative authentication priority, i.e., which device must authenticate to the other first.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner in one or more embodiments.

### Example Network Environment

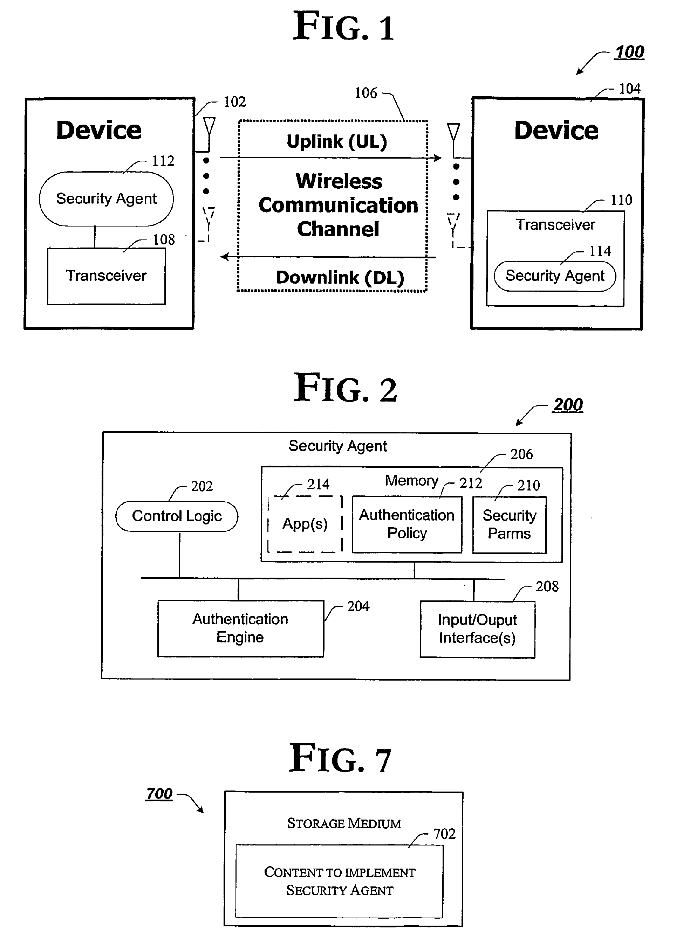

**Fig. 1** illustrates a block diagram of an example communication environment within which embodiments of the present invention may be practiced. In accordance with the illustrated example embodiment of Fig. 1, two or more devices 102 and 104 are depicted in selective communication through one or more wireless communication channel(s) 106. To facilitate such communication, each of the devices 102, 104 are depicted comprising one or more transceiver elements 108, 110, each including at least one transmitter and one receiver, although the invention is not limited in this respect.

In accordance with the teachings of the present invention, one or more of the devices 102, 104 may include an embodiment of a security agent, e.g., 112 and/or 114, to determine a relative order for authentication between the devices (i.e., an authentication priority). According to one example embodiment, described more fully below, one or more of security agent(s) 112, 114 may exchange at least a subset of an authentication policy with the remote device, compare the received authentication information (or, subset thereof) against at least a subset of a local authentication policy, and determine which of the device(s) 102, 104 should initiate the actual authentication process based, at least in part, on the result of the comparison. Examples of this determination of authentication priority, and mechanisms for resolving authentication policy conflicts are developed more fully below.

It will be apparent, given the description to follow, that the innovative security agent may well be implemented in any of a number of alternate embodiments within the scope of the present invention. Example implementations may well include deployment within a transceiver (e.g., agent 114 within transceiver 110), on a network interface card (e.g., within a media access controller (MAC), not particularly illustrated), as a software application within the device (not particularly illustrated), or as a service available to an accessing device (not particularly illustrated), although the scope of the invention is not limited in this regard.

Those skilled in the art will appreciate that communication environment 100 may well represent any of a number of wired or wireless communication and/or data networks known in the art. In this regard, but for their association with the innovative security agent, device 102 and device 104 are intended to represent any of a wide range of electronic appliances know in the art including, but not limited to wireless communication devices (e.g., cellular telephones, personal communication devices, and the like), computing devices with communications features (e.g., laptops, palmtops, personal digital assistants, desktop computers and the like), network infrastructure equipment (base stations, subscriber stations, hubs, routers, etc.) and the like, or any combination thereof.

Similarly, but for the possible integration of security agent (see, e.g., 114), transceiver(s) 108 and 110 are intended to represent any of a wide range of transceivers, or disparate transmitter/receiver pairs known in the art. In this regard, such transceiver(s) may well be comprised of radio frequency transceiver elements, optical transceiver elements, sub-RF electrical transceivers, and the like, or any combination thereof. Similarly, communication channel 106 is intended to represent one or more wireless communication channel(s) established according to the operating parameters and features of the transceiver(s) 108, 110.

For ease of explanation, and not limitation, an example implementation of the innovative security agent will be developed within the context of a wireless communication system application, although the scope of the invention is not limited in this regard. More particularly, in accordance with but one example implementation, communication environment 100 may represent a wireless metropolitan area network (WMAN) communication environment between a base station (104) and one or more subscriber station(s) 102, in accordance with the developing 802.16 standard within the Institute for Electrical and Electronic Engineers (IEEE). In this regard, the transceiver(s) 108, 110 may represent the transceiver elements (transmitter and/or receiver) necessary to generate a communication channel 106 defined by the emerging 802.16 physical layer (PHY) standard, although the invention is not so limited (see, e.g., IEEE Std 802.16-2001. ; IEEE Standard for local and metropolitan area networks; Part 16: Air Interface for Fixed Broadband Wireless Access Systems).

### Example Security Agent Architecture

Fig. 2 illustrates a block diagram of an example security agent architecture 200, in accordance with but one example embodiment of the invention. In accordance with the illustrated example embodiment of Fig. 2, security agent 200 is depicted comprising one or more of control logic 202, an authentication engine 204, memory 206 and one or more input/output (I/O) interface(s) 208, each coupled as depicted.

Memory 206 is depicted comprising one or more of security parameter(s) 210, authentication policy/policies 212 and, optionally, one or more applications (e.g., authentication application(s), security application(s), user interface(s), or communication application(s) in support of any of the foregoing) 214. It should be appreciated that security agent 200 may well be implemented in hardware, software, firmware, or any combination thereof. Moreover, although depicted as a number of separate elements, those skilled in the art will appreciate that a security agent of greater or lesser complexity which nonetheless determine the relative priority of authentication prior to actual authentication is anticipated within the scope and spirit of the present invention.

As used herein, control logic 202 may control the overall operation of the security agent 200. Control logic 202 may selectively invoke instances of authentication engine 204 to determine a relative authentication priority, as described below, in response to internal or external stimuli. In this regard, but for its use in association with the inventive features of security agent 200, control logic 202 is intended to represent any of a wide range of control logic including, but not limited to, microprocessor(s), controller(s), field-programmable gate array(s) (FPGA's), and the like, software to implement such functionality, or combinations thereof.

Similarly, but for its use in accordance with the example embodiment of security agent 200, memory 206 is intended to represent any of a wide range of storage technology including, but not limited to, volatile memory, non-volatile memory, programmatic memory (e.g., variables, etc.), communication channel memory (e.g., propagated signals, etc.), and the like, although the invention is not limited in this regard. As used herein, security parameters 210 may include one or more of security settings, security policies, security keys and the like. According to one example embodiment, security parameters 210 include one or more (e.g., three) keys for selective use by security agent 200 in implementing triple data encryption standard (3DES) cryptography of one or more communication messages, although the scope invention is not limited in this regard.

Input/output (I/O) interface(s) 208 enables one or more elements (202-206) to communicate with external and/or remote elements (e.g., of a host device). According to one example embodiment, security agent 200 may communicate with a local transceiver through such I/O interface(s) 208 to generate, issue and receive one or more messages necessary to determine authentication priority between the security agent and a remote device. In this regard, I/O interface(s) are intended to represent any of a wide variety of wired or wireless communication interfaces known in the art.

Authentication engine 204 may be selectively invoked by control logic 202 to determine a relative authentication priority between a local device and a remote device. In this regard, authentication engine 204 generates and issues (e.g., through I/O interface(s) 208 and an associated transceiver) one or more messages to the remote device including at least a subset of a local authentication policy. According to one example embodiment, the authentication policy(ies) 212 may be associated with the entire device, or with individual agents/threads within the device.

The authentication polic(ies) 212 may include content denoting an authentication priority level which denotes whether the local device requires prior authentication of the remote device as a prerequisite to authentication of the local device (i.e., essentially requiring the remote device to reveal its identity first), or not. According to one example embodiment, authentication priority may be denoted by a single bit: (0) local priority, or (1) remote priority (or, don't care). This authentication priority indicator may well be embedded within a header field, a security field, a payload field, or in a special authentication field of the message (or, datagram) generated for transmission to the remote device. In alternate embodiments, authentication priority designations of greater or lesser complexity may well be used within the scope and spirit of the invention.

According to one example embodiment, the authentication policy(ies) 212 may also include an indication of device class associated with the issuing device. According to one example embodiment, the indicator of device class (or, significance) may be used to resolve any conflicts in authentication priority levels between the devices (i.e., both devices declare that it has authentication priority over the other). In cases where both authentication policies (local and remote) denote the same authentication priority level, authentication engine 204 may then review the device class indicator associated with the two devices to resolve the conflict. As above, a single bit designator may well be used such as, e.g., (0) for low significance or (1) for high significance, although the invention is not limited in this regard. In certain embodiments, a two-bit field may be used, with one bit associated with the authentication policy and another bit associated with device significance, although the invention is not limited in this regard.

Upon some internal or external stimuli, security agent 200 may selectively invoke an instance of authentication engine 204 to determine a relative authentication priority between at least two devices - a local device and a remote device. In this regard, authentication engine 204 may generate and issue a message (or datagram) to the remote device including at least a subset of the local authentication policy(ies) 212. As used herein, the internal or external stimuli may include one or more of a periodic or random indication to complete authentication from a host device, receipt of a message (e.g., broadcast beacon, paging signal, or discovery signal) from a remote device, and the like. The subset of the local authentication policy(ies) 212 may be denoted in any one or more of a header field, security field, authentication field or payload field of the generated datagram (e.g., a packet, word, byte, etc.) transmit from the local device to a remote device through one or more communication channel(s) (in-band and/or out-of-band).

Authentication engine 204 may also receive a message (or datagram) from a remote device, perhaps in response to a message issued by authentication engine 204, including at least a subset of an authentication policy associated with the remote device. Upon receipt of at least a subset of an authentication policy from the remote device, authentication engine 204 can compare the content of the message against at least a subset of a local authentication policy 212 to determine a relative authentication priority between the devices. According to one embodiment, authentication engine 204 may compare one or more of the indication of authentication priority, and optionally device class, to determine which authentication policy will control subsequent, two-way authentication procedures, i.e., which device will have to initiate authentication disclosing its identity first.

As used herein, the determination and population of one or more of the authentication information within the authentication policy 212 (e.g., authentication priority, device class, etc.) and/or security parameter(s) 210 may occur in any manner of ways and times. According to one embodiment, the content (210, 212) is determined during manufacture of the device. According to one embodiment, the security parameters 210 may be determined during manufacture, while the authentication policy 212 may be established by an end-user (e.g., an administrator), or vice versa. Any number of permutations of the foregoing are anticipated within the spirit and scope of the present invention.

### Example Security Agent Operation

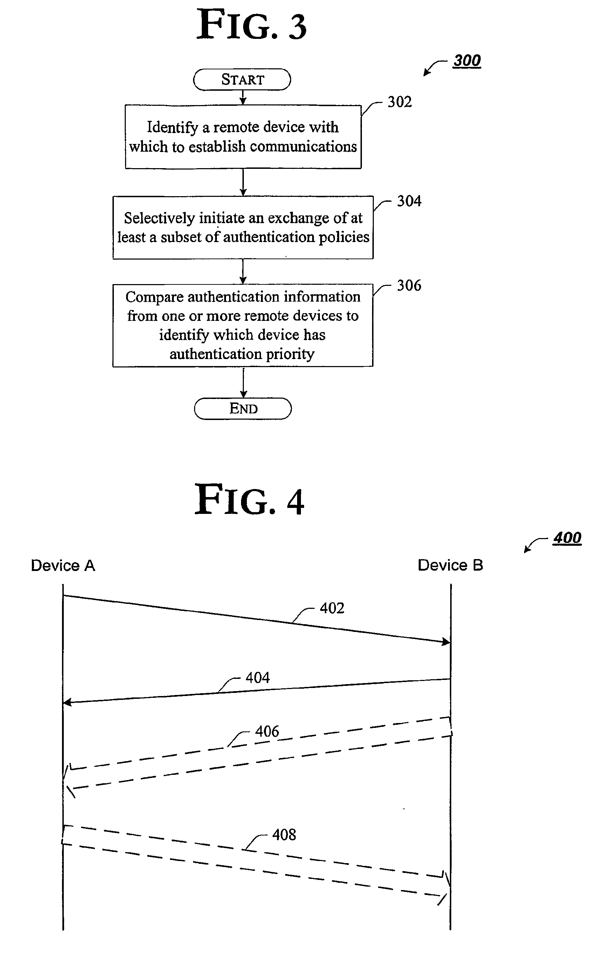

Having introduced an example embodiment of the architecture and operating environment of the security agent 200, above, attention is now directed to Fig. 3, where a flow chart of an example method for determining the relative authentication priority between two or more devices is presented, in accordance with one example embodiment. For ease of illustration, and not limitation, the method of Fig. 3 is developed with continued reference to Figs. 1 and 2, as appropriate. Nonetheless, it is to be appreciated that the teachings of Fig. 3 may well be implemented in alternate architectures and/or communication environs without deviating from the spirit and scope of the present invention.

**Fig. 3** is a flow chart of an example method for determining the relative authentication priority of two or more devices, according to one example embodiment of the present invention. In accordance with the illustrated example embodiment of Fig. 3, the method begins with block 302, wherein a first device 102 (e.g., the subscriber station in the WMAN paradigm introduced above) identifies a remote device 104 (e.g., the base station) with which to establish communication. According to one example embodiment, this identification may be the result of receiving a beacon or paging signal from the remote device 104. Alternatively, device 102 may decide to (re)authenticate accessible devices (e.g., 104) from time to time. Regardless of whether the impetus is the result of internal or external stimuli, device 102 invokes an instance of security agent 112 to determine a relative authentication priority between the devices (102, 104) before actual authentication begins.

In block 304, security agent 112 may selectively initiate the exchange of at least a subset of its authentication policy(ies) 212 with the remote device 104. More specifically, as introduced above, control logic 202 of security agent 112 may invoke an instance of authentication engine 204 to generate and issue a message to the remote device including at least a subset of the authentication policy. According to one example embodiment, the message may include authentication information such as one or more of an authentication priority and/or a device significance associated with device 102. The message, generated by authentication engine 204 is passed to an associated transceiver 108 via I/O interface(s) 208 for transmission to at least the remote device 104.

In block 306, authentication engine 204 of security agent 112 may compare the authentication information associated with device 104 with local authentication policy information to identify which device (102 or 104) enjoys authentication priority over the other device (i.e., which device must initiate authentication, disclosing its identity first).

More specifically, according to one example embodiment, authentication engine 204 may receive a response message from the remote device 104 including authentication information (e.g., authentication priority, device class, etc.) associated with at least a subset of the authentication policy 212 of the remote device 104. Authentication engine 204 of one or both of the local device 102 and/or remote device 104, in response to the exchange of the authentication information, may determine whether the authentication policy of device 102 or device 104 controls which device must authenticate first. In particular, authentication engine 204 in one or more of the devices 102, 104 compares the authentication information to determine whether one of the devices has a higher authentication priority and/or device class.

According to one embodiment, if the authentication information from the two devices share a common authentication priority, authentication agent 204 in the devices may break the "tie" through analysis of the device significance indicators.

### EXAMPLE APPLICATION AND IMPLEMENTATION

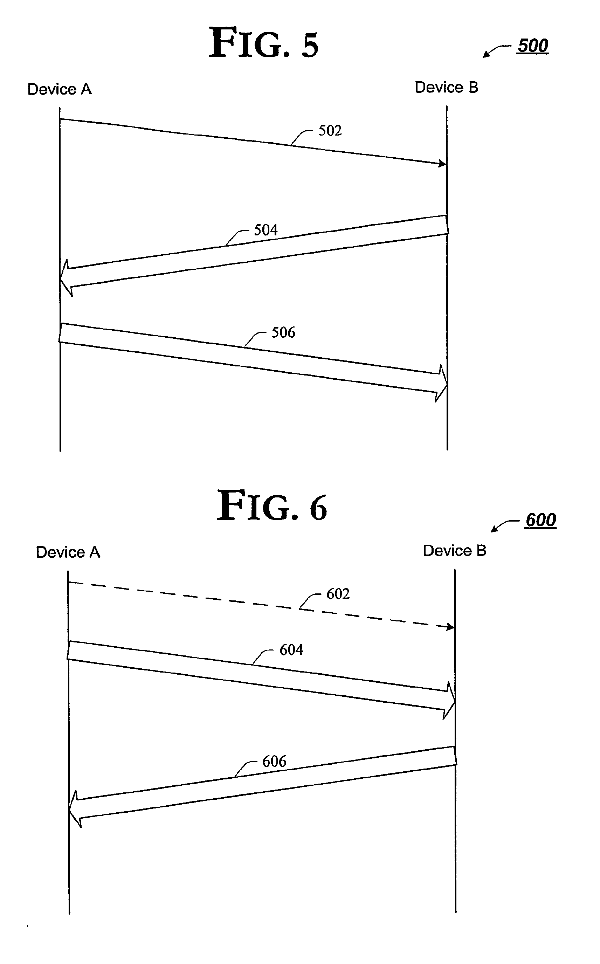

An example implementation of the foregoing method is described herein are further illustrated with reference to the communication flow diagrams of Figs. 4-6, below. In particular, the following communication flow diagrams illustrate three alternate scenarios in accordance with an example WMAN implementation. In the first scenario (Fig. 4), each of the local device 102 (e.g., subscriber station) and the remote device 104 (e.g., base station) share the same authentication priority level. In the second scenario, (Fig. 5), the local device 102 has a higher authentication priority. The third scenario (Fig. 6) is representative of a situation in which the local device 102 is willing to initiate authentication regardless of the authentication priority of the remote device 104.

With reference to **Fig. 4****,** a communication flow diagram exhibiting a method for determining authentication priority according to one example embodiment. As introduced above, the communication flow diagram of Fig. 4 is representative of a situation in which each of the devices 102,104 share a common authentication policy, i.e., the authentication policy of both devices requires the other device to initiate authentication (i.e., disclosing its identity first).

As shown, the process of Fig. 4 begins with generation and issuance of message 402 including at least a subset of an authentication policy associated with the issuing device. According to one embodiment, the subset of the authentication policy includes authentication information such as, for example, one or more of authentication priority level and/or device class information. According to one example embodiment, the issuing device is the subscriber station 102 in anticipation of authentication with a base station 104.

Upon receipt of message 402, a security agent 114 in the remote device(s) 104 respond with message 404 including at least a subset of an authentication policy associated with the remote device 104. As above, the message may contain authentication information including one or more of authentication priority level and/or device class information associated with the remote device, e.g., 104.

Upon receipt of at least a subset of authentication policy from remote device 104, security agent 112 invokes an instance of authentication engine 204 to compare authentication information received from the remote device 104 against authentication information contain in a local authentication policy. In particular, authentication engine 204 compares the authentication priority level of the remote device 104 against that of the local device 102. Security agent 114 in the remote device 104 similarly invokes authentication engine 204 to independently perform this analysis and identify which of the devices enjoys authentication priority. In accordance with this example scenario, they are both the same (e.g., "0") each requiring the other device to initiate the authentication. According to one example embodiment, the process may terminate at this point without subsequent authentication proceedings - i.e., an impasse.

In an alternate embodiment (denoted by dashed lines), introduced above, rather than succumbing to the apparent impasse, the authentication engine 204 in security agent 112, 114 may then compare the device class indication of the remote device against the local device to resolve the conflict. In this case, the security agents 112, 114 determine that local device 102 enjoys authentication priority based, a least in part, on a superior device classification, and the remote device initiates authentication proceedings with one or more messages 406. Once the remote device 104 is authenticated to the local device 104, local device 104 completes the mutual authentication by issuing one or more authentication messages 408.

**Fig. 5** is a communication flow diagram exhibiting a method for determining authentication priority according to one example embodiment. More particularly, as introduced above, Fig. 5 represents a situation in which the local device 102 enjoys a higher authentication priority level over the remote device 104, requiring the remote device to initiate authentication proceedings (authenticating itself to the local device 102, before the local device authenticates to the remote device 104.

Briefly, as above, local device 102 generates and issues a message 502 to remote device 104 including at least a subset of an authentication policy associated with the local device 102. The subset of the authentication policy may include one or more of a authentication priority level and/or device class information. In this example, a security agent 114 in device 104 invokes an instance of authentication engine 204 to analyze the subset of the authentication policy embedded within the received message and determines that device 102 enjoys authentication priority over device 104. Accordingly, device 104 initiates authentication message(s) 504 before device 102 then completes the mutual authentication with message(s) 506.

**Fig. 6** is a communication flow diagram exhibiting a method for determining authentication priority according to one example embodiment.

More particularly, as introduced above, Fig. 6 represents a situation in which the local device 102 does not require a remote device to initiate authentication. In this case, local device 102 may generate and issue a message 602 including at least a subset of an authentication policy 212 prior to initiating authentication, but need not do so. That is, since the authentication policy 212 of device 102 does not require prior authentication of the remote device 104, local device 102 may simply initiate authentication on its own accord, denoted by messages 604. Upon (or in parallel with) authentication of device 102 to device 104, device 104 generates and issues message(s) 606 to complete the mutual authentication of device 104 to device 102, as shown.

### Alternate Embodiment(s)

**Fig. 7** illustrates a block diagram of an example storage medium comprising content which, when accessed, causes an electronic appliance to implement one or more aspects of the security agent 200 and/or associated methods 300-600. In this regard, storage medium 700 includes content 702 (e.g., instructions, data, or any combination thereof) which, when executed, causes the appliance to implement one or more aspects of security agent 200, described above.

The machine-readable (storage) medium 700 may include, but is not limited to, floppy diskettes, optical disks, CD-ROMs, and magneto-optical disks, ROMs, RAMs, EPROMs, EEPROMs, magnet or optical cards, flash memory, or other type of media / machine-readable medium suitable for storing electronic instructions. Moreover, the present invention may also be downloaded as a computer program product, wherein the program may be transferred from a remote computer to a requesting computer by way of data signals embodied in a carrier wave or other propagation medium via a communication link (e.g., a modem, radio or network connection).

In the description above, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form.

Embodiments of the present invention may be used in a variety of applications. Although the present invention is not limited in this respect, the circuits disclosed herein may be used in microcontrollers, general-purpose microprocessors, Digital Signal Processors (DSPs), Reduced Instruction-Set Computing (RISC), Complex Instruction-Set Computing (CISC), among other electronic components. However, it should be understood that the scope of the present invention is not limited to these examples.

Embodiments of the present invention may also be included in integrated circuit blocks referred to as core memory, cache memory, or other types of memory that store electronic instructions to be executed by the microprocessor or store data that may be used in arithmetic operations. In general, an embodiment using multistage domino logic in accordance with the claimed subject matter may provide a benefit to microprocessors, and in particular, may be incorporated into an address decoder for a memory device. Note that the embodiments may be integrated into radio systems or hand-held portable devices, especially when devices depend on reduced power consumption. Thus, laptop computers, cellular radiotelephone communication systems, two-way radio communication systems, one-way pagers, two-way pagers, personal communication systems (PCS), personal digital assistants (PDA's), cameras and other products are intended to be included within the scope of the present invention.

The present invention includes various operations. The operations of the present invention may be performed by hardware components, or may be embodied in machine-executable content (e.g., instructions), which may be used to cause a general-purpose or special-purpose processor or logic circuits programmed with the instructions to perform the operations. Alternatively, the operations may be performed by a combination of hardware and software. Moreover, although the invention has been described in the context of a computing appliance, those skilled in the art will appreciate that such functionality may well be embodied in any of number of alternate embodiments such as, for example, integrated within a communication appliance (e.g., a cellular telephone).

Many of the methods are described in their most basic form but operations can be added to or deleted from any of the methods and information can be added or subtracted from any of the described messages without departing from the basic scope of the present invention. Any number of variations of the inventive concept are anticipated within the scope and spirit of the present invention. In this regard, the particular illustrated example embodiments are not provided to limit the invention but merely to illustrate it. Thus, the scope of the present invention is not to be determined by the specific examples provided above but only by the plain language of the following claims.

## Claims

1. A method comprising:
receiving authentication information associated with an authentication policy from a remote device (104); and
comparing the received authentication information against authentication information associated with an authentication policy in a local device (102);
**characterised by**
determining an authentication priority between the local device and the remote device based, at least in part, on the comparison of the authentication information, the authentication priority indicating a relative order for authentication between the local device and the remote device.

2. A method according to claim 1, wherein the authentication information includes an indication of priority level associated with the device.

3. A method according to claim 2, wherein authentication policy exhibiting a higher priority level will control which device initiates authentication between the local device (102) and the remote device (104).

4. A method according to claim 3, wherein the authentication information further includes an indication of device class, wherein a tie in priority level between the devices is resolved through analysis of the indication of device class associated with the local device (102) and the remote device (104).

5. A method according to claim 4, wherein the indication of device class denotes whether the device is one of a base station, a subscriber station, and/or a client station.

6. A method according to claim 5, wherein a base station has a higher device class than a subscriber station.

7. A method according to claim 1, further comprising:
selecting one of the remote device (104) or the local device (102) to initiate authentication based, at least in part, on the determined authentication priority.

8. A method according to claim 7, further comprising: initiating an authentication process by the selected one of the remote device (104) or the local device (102).

9. A storage medium comprising content which, when accessed by an electronic appliance, causes the electronic appliance to perform the method according to claim 1.

10. An apparatus comprising:
a transmitter, to selectively communicate with a remote device (104); and
a security agent (112, 200), associated with a local device (102) and coupled with the transmitter, to receive authentication information associated with an authentication policy from a remote device, and to compare the received authentication information against authentication information associated with an authentication policy in a local device;
**characterised in that**
the security agent is arranged to identify a relative authentication priority between the local device and the remote device based, at least in part, on the comparison of the authentication information, the authentication priority indicating a relative order for authentication between the local device and the remote device.

11. An apparatus according to claim 10, the apparatus further comprising:
memory (206), responsive to the security agent (112, 200), to receive and maintain an authentication policy (212) associated with a device.

12. An apparatus according to claim 11, the authentication policy (212) comprising authorization information including an indication of authentication priority level associated with the device.

13. An apparatus according to claim 12, wherein the authentication policy (212) exhibiting a higher priority level will control which device initiates authentication between the local device (102) and the remote device (104).

14. An apparatus according to claim 13, the memory further comprising an indication of device class within the authentication policy (212), wherein a tie in priority level between the devices is resolved by the security agent (112, 200) through comparison of the indication of device class associated with the local device (102) and the remote device (104).

15. An apparatus according to claim 14, wherein the indication of device class denotes whether the device is one of a base station, a subscriber station, and/or a client station.

16. An apparatus according to claim 15, wherein a base station has a higher device class than a subscriber station.

17. An apparatus according to claim 10, comprising a transceiver (108) to selectively establishes a communication channel with the remote device (104) through which the transceiver receives at least a subset of the authentication policy associated with the remote device.

18. An apparatus according to claim 17, wherein the transceiver (108) is a wireless transceiver, and wherein the communication channel is a wireless communication channel in accordance with a wireless metropolitan area network (WMAN) communication standard.

19. An apparatus according to claim 10, wherein the security agent (112, 200) selects one of the remote device (104) or the local device (102) to initiate authentication based, at least in part, on the determined authentication priority.

20. An apparatus according to claim 19, wherein the security agent (112, 200) initiates an authentication process by the selected one of the remote device (104) or the local device (102).

## Patentansprüche

1. Verfahren, welches das Folgende umfasst:
Empfangen von Authentifizierungsinformationen, welche zu einer Authentifizierungsstrategie gehören, von einer entfernten Vorrichtung (104); und
Vergleichen der empfangenen Authentifizierungsinformationen mit Authentifizierungsinformationen, die zu einer Authentifizierungsstrategie in einer lokalen Vorrichtung (102) gehören;
**gekennzeichnet durch** das
Ermitteln einer Authentifizierungspriorität zwischen der lokalen Vorrichtung und der entfernten Vorrichtung zumindest teilweise basierend auf dem Vergleich der Authentifizierungsinformationen, wobei die Authentifizierungspriorität eine relative Reihenfolge für die Authentifizierung zwischen der lokalen Vorrichtung und der entfernten Vorrichtung anzeigt.

2. Verfahren nach Anspruch 1, wobei die Authentifizierungsinformationen eine Angabe einer zu der Vorrichtung gehörenden Prioritätsstufe umfassen.

3. Verfahren nach Anspruch 2, wobei die Authentifizierungsstrategie, welche eine höhere Prioritätsstufe aufweist, regelt, welche Vorrichtung die Authentifizierung zwischen der lokalen Vorrichtung (102) und der entfernten Vorrichtung (104) beginnt.

4. Verfahren nach Anspruch 3, wobei die Authentifizierungsinformationen ferner eine Angabe der Vorrichtungsklasse umfassen, wobei ein Gleichstand der Prioritätsstufe der Vorrichtungen durch die Analyse der Angabe der zu der lokalen Vorrichtung (102) und der entfernten Vorrichtung (104) gehörenden Vorrichtungsklasse gelöst wird.

5. Verfahren nach Anspruch 4, wobei die Angabe der Vorrichtungsklasse bezeichnet, ob es sich um eine Vorrichtung einer Basisstation, einer Teilnehmerstation und/oder einer Client-Station handelt.

6. Verfahren nach Anspruch 5, wobei eine Basisstation eine höhere Vorrichtungsklasse als eine Teilnehmerstation aufweist.

7. Verfahren nach Anspruch 1, welches ferner das Folgende umfasst:
Auswählen entweder der entfernten Vorrichtung (104) oder der lokalen Vorrichtung (102), um die Authentifizierung zu beginnen, zumindest teilweise basierend auf der ermittelten Authentifizierungspriorität.

8. Verfahren nach Anspruch 7, welches ferner das Folgende umfasst:
Beginnen eines Authentifizierungsverfahrens durch die ausgewählte entfernte Vorrichtung (104) oder lokale Vorrichtung (102).

9. Speichermedium, welches einen Inhalt umfasst, welcher, wenn auf ihn durch ein elektronisches Gerät zugegriffen wird, bewirkt, dass das elektronische Gerät das Verfahren nach Anspruch 1 ausführt.

10. Vorrichtung, welche das Folgende umfasst:
einen Sender, um mit einer entfernten Vorrichtung (104) selektiv Daten auszutauschen; und
einen Sicherheitsagenten (112, 200), welcher zu einer lokalen Vorrichtung (102) gehört und mit dem Sender verbunden ist, um Authentifizierungsinformationen, welche zu einer Authentifizierungsstrategie gehören, von einer entfernten Vorrichtung zu empfangen und die empfangenen Authentifizierungsinformationen mit Authentifizierungsinformationen zu vergleichen, die zu einer Authentifizierungsstrategie in einer lokalen Vorrichtung gehören;
**dadurch gekennzeichnet, dass**
der Sicherheitsagent so eingerichtet ist, dass er eine relative Authentifizierungspriorität zwischen der lokalen Vorrichtung und der entfernten Vorrichtung zumindest teilweise basierend auf dem Vergleich der Authentifizierungsinformationen identifiziert, wobei die Authentifizierungspriorität eine relative Reihenfolge für die Authentifizierung zwischen der lokalen Vorrichtung und der entfernten Vorrichtung anzeigt.

11. Vorrichtung nach Anspruch 10, wobei die Vorrichtung ferner das Folgende umfasst:
einen Speicher (206), welcher für den Sicherheitsagenten (112, 200) ansprechbar ist, um eine zu einer Vorrichtung gehörende Authentifizierungsstrategie (212) zu empfangen und zu speichern.

12. Vorrichtung nach Anspruch 11, wobei die Authentifizierungsstrategie (212) Authentifizierungsinformationen umfasst, welche eine Angabe der zu der Vorrichtung gehörenden Authentifizierungsprioritätsstufe umfassen.

13. Vorrichtung nach Anspruch 12, wobei die Authentifizierungsstrategie (212), welche eine höhere Prioritätsstufe aufweist, regelt, welche Vorrichtung die Authentifizierung zwischen der lokalen Vorrichtung (102) und der entfernten Vorrichtung (104) beginnt.

14. Vorrichtung nach Anspruch 13, wobei der Speicher ferner eine Angabe der Vorrichtungsklasse innerhalb der Authentifizierungsstrategie (212) umfasst, wobei ein Gleichstand der Prioritätsstufe der Vorrichtungen durch den Sicherheitsagenten (112, 200) über den Vergleich der Angabe der zu der lokalen Vorrichtung (102) und der entfernten Vorrichtung (104) gehörenden Vorrichtungsklasse gelöst wird.

15. Vorrichtung nach Anspruch 14, wobei die Angabe der Vorrichtungsklasse bezeichnet, ob es sich um eine Vorrichtung einer Basisstation, einer Teilnehmerstation und/oder einer Client-Station handelt.

16. Vorrichtung nach Anspruch 15, wobei eine Basisstation eine höhere Vorrichtungsklasse als eine Teilnehmerstation aufweist.

17. Vorrichtung nach Anspruch 10, welche einen Transceiver (108) umfasst, um selektiv einen Kanal zum Datenaustausch mit der entfernten Vorrichtung (104) einzurichten, über welchen der Transceiver wenigstens eine zu der entfernten Vorrichtung gehörende Untergruppe der Authentifizierungsstrategie empfängt.

18. Vorrichtung nach Anspruch 17, wobei es sich bei dem Transceiver (108) um einen drahtlosen Transceiver handelt, und wobei es sich bei dem Datenaustauschkanal um einen drahtlosen Datenaustauschkanal nach einem Datenaustauschstandard für größere drahtlose regionale Netze (Wireless Metropolitan Area Networks, WMAN) handelt.

19. Vorrichtung nach Anspruch 10, wobei der Sicherheitsagent (112, 200) zumindest teilweise basierend auf der ermittelten Authentifizierungspriorität entweder die entfernte Vorrichtung (104) oder die lokale Vorrichtung (102) dafür auswählt, die Authentifizierung zu beginnen.

20. Vorrichtung nach Anspruch 19, wobei der Sicherheitsagent (112, 200) ein Authentifizierungsverfahren durch die ausgewählte entfernte Vorrichtung (104) oder lokale Vorrichtung (102) beginnt.

## Revendications

1. Procédé comprenant les opérations consistant à :
recevoir les informations d'authentification associées à une politique d'authentification à partir d'un dispositif à distance (104) ; et
comparer les informations d'authentification reçues et les informations d'authentification associées à une politique d'identification dans un dispositif local (102) ;
**caractérisé par** le fait de
déterminer une priorité d'authentification entre le dispositif local et le dispositif à distance, en se basant au moins en partie sur la comparaison des informations d'authentification, la priorité d'authentification indiquant un ordre relatif pour l'authentification entre le dispositif local et le dispositif à distance.

2. Procédé selon la revendication 1, dans lequel les informations d'authentification comprennent une indication du niveau de priorité associé au dispositif.

3. Procédé selon la revendication 2, dans lequel la politique d'authentification présentant un niveau de priorité supérieur contrôle quel dispositif déclenche l'authentification entre le dispositif local (102) et le dispositif à distance (104).

4. Procédé selon la revendication 3, dans lequel les informations d'authentification comprennent, de plus, une indication de la classe de dispositif, dans lequel un lien dans le niveau de priorité entre les dispositifs est résolu par l'analyse de l'indication de la classe du dispositif associée au dispositif local (102) et au dispositif à distance (104).

5. Procédé selon la revendication 4, dans lequel l'indication de la classe de dispositif désigne si le dispositif est l'un des éléments suivants : une station de base, une station d'abonné et/ou une station de client.

6. Procédé selon la revendication 5, dans lequel une station de base présente une classe de dispositif supérieure à une station d'abonné.

7. Procédé selon la revendication 1, comprenant de plus :
la sélection du dispositif à distance (104) ou du dispositif local (102) pour déclencher l'authentification basée, au moins en partie, sur la priorité d'authentification déterminée.

8. Procédé selon la revendication 7, comprenant de plus le déclenchement d'un procédé d'authentification par le dispositif sélectionné parmi le dispositif à distance (104) ou le dispositif local (102).

9. Support de mémoire comprenant un contenu qui, lorsqu'il est accédé par un dispositif électronique, a pour effet que le dispositif électronique effectue le procédé selon la revendication 1.

10. Appareil comprenant:
un émetteur pour communiquer de façon sélective avec un dispositif à distance (104) ; et
un agent de sécurité (112, 200) associé à un dispositif local (102) et couplé à l'émetteur, pour recevoir les informations d'authentification associées à une politique d'authentification à partir d'un dispositif à distance, et pour comparer les informations d'authentification reçues aux informations d'authentification associées à une politique d'authentification dans un dispositif local ;
**caractérisé en ce que**
l'agent de sécurité est apte à identifier une priorité d'authentification relative entre le dispositif local et le dispositif à distance en fonction, au moins en partie, de la comparaison des informations d'authentification, la priorité d'authentification indiquant un ordre relatif pour l'authentification entre le dispositif local et le dispositif à distance.

11. Appareil selon la revendication 10, l'appareil comprenant de plus :
une mémoire (206), sensible à l'agent de sécurité (112, 200), pour recevoir et maintenir une politique d'authentification (212) associée à un dispositif.

12. Appareil selon la revendication 11, la politique d'authentification (212) comprenant des informations d'autorisation incorporant une indication du niveau de priorité d'authentification associé au dispositif.

13. Appareil selon la revendication 12, dans lequel la politique d'authentification (212) présentant un niveau de priorité supérieur contrôle quel dispositif déclenche l'authentification entre le dispositif local (102) et le dispositif à distance (104).

14. Appareil selon la revendication 13, la mémoire comprenant, de plus, une indication de la classe de dispositif à l'intérieur de la politique d'authentification (212), dans laquelle un lien dans le niveau de priorité entre les dispositifs est résolu par l'agent de sécurité (112, 200), par comparaison de l'indication de la classe de dispositif associée au dispositif local (102) et au dispositif à distance (104).

15. Appareil selon la revendication 14, dans lequel l'indication de la classe de dispositif désigne si le dispositif est l'un des éléments suivants : une station de base, une station d'abonné et/ou une station client.

16. Appareil selon la revendication 15, dans lequel une station de base présente une classe de dispositif supérieure à une station d'abonné.

17. Appareil selon la revendication 10, comprenant un émetteur-récepteur (108) pour établir sélectivement un canal de communication avec le dispositif à distance (104) par lequel l'émetteur-récepteur reçoit au moins un sous-ensemble de politique d'authentification associé au dispositif à distance.

18. Appareil selon la revendication 17, dans lequel l'émetteur-récepteur (108) est un émetteur-récepteur sans fil, et dans lequel le canal de communication est un canal de communication sans fil selon une norme de communication (WMAN) réseau de zones métropolitaines sans fil.

19. Appareil selon la revendication 10, dans lequel l'agent de sécurité (112, 200) choisit l'un parmi le dispositif à distance (104) ou le dispositif local (102) pour déclencher l'authentification en fonction, au moins en partie, de la priorité d'authentification déterminée.

20. Appareil selon la revendication 19, dans lequel l'agent de sécurité (112, 200) déclenche un procédé d'authentification par le dispositif sélectionné parmi le dispositif à distance (104) ou le dispositif local (102).
